(19) Europäisches Patentamt
European Patent Office
Office européen des brevets

(11) **EP 4 332 001 B1**

(12) **FASCICULE DE BREVET EUROPEEN**

(45) Date de publication et mention
de la délivrance du brevet:
**19.03.2025   Bulletin 2025/12**

(51) Classification Internationale des Brevets (IPC):
**B64D 31/02** *(2006.01)*      **G05D 1/606** *(2024.01)*
**G05D 1/646** *(2024.01)*

(21) Numéro de dépôt: **23193666.7**

(52) Classification Coopérative des Brevets (CPC):
**G05D 1/606; G05D 1/646;** G05D 2109/22

(22) Date de dépôt: **28.08.2023**

(54) **PROCÉDÉ D'AJUSTEMENT DE COMMANDES D'AERONEF**

VERFAHREN ZUR EINSTELLUNG VON FLUGZEUGSTEUERUNGEN

METHOD FOR ADJUSTING AIRCRAFT CONTROLS

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité:  **29.08.2022   FR 2208631**

(43) Date de publication de la demande:
**06.03.2024   Bulletin 2024/10**

(73) Titulaire: **Airbus Operations (S.A.S.)**
**31060 Toulouse Cedex 9 (FR)**

(72) Inventeurs:
 • **DELANNOY, Stéphane**
   **31060 Toulouse (FR)**
 • **TORRALBA, José**
   **31060 Toulouse (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2016 023 776**

• **PEROZZI GABRIELE ET AL: "On sliding mode
control design for UAV using realistic
aerodynamic coefficients", 2017 IEEE 56TH
ANNUAL CONFERENCE ON DECISION AND
CONTROL (CDC), IEEE, 12 December 2017
(2017-12-12), pages 5403 - 5408, XP033304624,
DOI: 10.1109/CDC.2017.8264459**

**Description**

DOMAINE TECHNIQUE

La présente invention concerne le domaine de l'ajustement de commandes d'aéronef pour prendre en compte un impact de vent sur l'aéronef en vol.

ETAT DE LA TECHNIQUE ANTERIEURE

Lorsqu'un aéronef est en vol, le vent entraîne des écarts de trajectoire de l'aéronef par rapport à une trajectoire souhaitée, dite trajectoire de référence. De plus, notamment à cause de turbulences, le vent a un impact sur la trajectoire de l'aéronef, ou sur la vitesse angulaire de l'aéronef, ou sur l'assiette de l'aéronef, ou un impact de fatigue sur la structure de l'aéronef ou d'autres éléments de l'aéronef.

Le document US 2016/023776 AI décrit une méthode pour déterminer le vent à partir des signaux des gouvernes (aileron, etc.) d'un avion.

Sur les aéronefs modernes, les commandes de vol sont des commandes de vol électriques numériques, ce qui permet d'ajuster par traitement numérique le contrôle des gouvernes de ces aéronefs.

Il est alors souhaitable de fournir une solution qui permette de réduire, de manière automatique et par traitement numérique, l'impact du vent sur la trajectoire de l'aéronef et/ou sur la fatigue de la structure de l'aéronef.

EXPOSE DE L'INVENTION

A cet effet, il est proposé un procédé de contrôle de gouvernes d'un aéronef, le procédé étant effectué par un système de contrôle des gouvernes de l'aéronef sous forme de circuiterie électronique et comportant les étapes suivantes : obtenir une loi de commande des gouvernes $u_i$ en fonction de commandes de vol de l'aéronef ; obtenir des mesures de vitesse au sol $V_{GND}$ de l'aéronef, de vitesse vraie $V_{TAS}$ de l'aéronef, d'angle de roulis $\varphi$ de l'aéronef, d'angle de tangage $\theta$ de l'aéronef, d'angle d'incidence $\alpha$ de l'aéronef, d'angle de dérapage $\beta$ de l'aéronef, et d'angle de pente $\gamma$ de l'aéronef ; effectuer une estimation du vent V en trois dimensions à partir des mesures obtenues ; effectuer un ajustement de la loi de commande des gouvernes $u_i$, afin de contrer l'effet du vent estimé, et obtenir ainsi une loi de commande des gouvernes ajustée $u_a$, en ajoutant, à la loi de commande des gouvernes $u_i$, un terme de compensation du vent $u_w$ comportant un terme proportionnel à la dérivée $\dot{V}$ de l'estimation de vent $V$ ; et contrôler l'aéronef en appliquant la loi de commande ajustée $u_a$. Ainsi, l'impact du vent sur l'aéronef est réduit par traitement numérique et ajustement automatique du contrôle de gouvernes de l'aéronef.

Dans un mode de réalisation particulier :

$$u_w = -inv(CB)CM\,\dot{V}$$

où C, B et M sont des matrices définies par

$$\dot{x} = Ax + B(u_w + u_i) + M\dot{V}$$

avec :

$$y = Cx = \frac{C}{s}\dot{x}$$

où :

- *x* représente sous forme de vecteurs l'état courant de l'aéronef, défini par des paramètres aéronautiques influant sur la stabilité de l'aéronef,
- *ẋ* représente l'état de l'aéronef après application de la loi de commande des gouvernes, ici la loi de commande des gouvernes $u_a$,
- *y* représente des sorties de l'aéronef sur lesquelles l'impact du vent est à minimiser,
- *A, B* et *C* représentent des matrices d'état de l'aéronef restituant la dynamique de son mouvement,
- *s* représente l'opérateur de Laplace, et
- *M* est une matrice de transfert de vent V.

Dans un mode de réalisation particulier, la loi de commande des gouvernes ajustée $u_a$ est obtenue en ajoutant en outre, à la loi de commande des gouvernes $u_i$, un terme proportionnel à l'intégrale de la dérivée $\dot{V}$ de l'estimation de vent $V$.

Plus particulièrement, l'aéronef est modélisé avec un filtre du premier ordre de constante $\tau$, et

$$\begin{cases} K_i = -1 \\ K = -\tau \end{cases}$$

où $K_i$ est un coefficient multiplicateur du terme proportionnel de l'intégrale de la dérivée $V$ de l'estimation de vent $V$ et où $K$ est un coefficient multiplicateur du terme proportionnel à la dérivée $V$ de l'estimation de vent $V$.

Dans un mode de réalisation particulier, la loi de commande des gouvernes ajustée $u_a$ est obtenue en ajoutant en outre, à la loi de commande des gouvernes $u_i$, un terme proportionnel à la dérivée seconde $\ddot{V}$ de l'estimation de vent $V$.

Plus particulièrement, l'aéronef est modélisé avec un filtre du deuxième ordre ayant un amortissement $\xi_0$ et une pulsation $\omega_0$, et :

$$\begin{cases} K_i = -1 \\ K = -\dfrac{2\xi_0}{\omega_0} \\ K_d = -\dfrac{1}{\omega_0^2} \end{cases}$$

où $K_i$ est un coefficient multiplicateur du terme proportionnel à l'intégral de la dérivée $\dot{V}$ de l'estimation de vent $V$, où $K$ est un coefficient multiplicateur du terme proportionnel à la dérivée $\dot{V}$ de l'estimation de vent $V$ et où $K_d$ est un coefficient multiplicateur du terme proportionnel à la dérivée seconde $\ddot{V}$ de l'estimation de vent $V$.

Il est également proposé un produit programme d'ordinateur, comportant des instructions entraînant l'exécution, par un processeur, du procédé selon l'un quelconque des modes de réalisation exposés ci-dessus, lorsque lesdites instructions sont exécutées par le processeur. Il est également proposé un support de stockage, stockant un programme d'ordinateur comportant des instructions entraînant l'exécution, par un processeur, du procédé selon l'un quelconque des modes de réalisation exposés ci-dessus, lorsque lesdites instructions sont lues et exécutées par le processeur.

Il est également proposé un système de contrôle de gouvernes d'un aéronef sous forme de circuiterie électronique configurée pour implémenter les étapes suivantes : obtenir une loi de commande des gouvernes $u_i$ en fonction de commandes de vol de l'aéronef ; obtenir des mesures de vitesse au sol $V_{GND}$ de l'aéronef, de vitesse vraie $V_{TAS}$ de l'aéronef, d'angle de roulis $\varphi$ de l'aéronef, d'angle de tangage $\theta$ de l'aéronef, d'angle d'incidence $\alpha$ de l'aéronef, d'angle de dérapage $\beta$ de l'aéronef, et d'angle de pente $\gamma$ de l'aéronef ; effectuer une estimation du vent $V$ en trois dimensions à partir des mesures obtenues ; effectuer un ajustement de la loi de commande des gouvernes $u_i$, afin de contrer l'effet du vent estimé, et obtenir ainsi une loi de commande des gouvernes ajustée $u_a$, en ajoutant, à la loi de commande des gouvernes $u_i$, un terme de compensation du vent $u_w$ comportant un terme proportionnel à la dérivée $\dot{V}$ de l'estimation de vent $V$ ; et contrôler l'aéronef en appliquant la loi de commande ajustée $u_a$.

Il est également proposé un aéronef comportant un système de contrôle de gouvernes tel qu'exposé ci-dessus.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement, en vue de dessus, un aéronef équipé d'un système de contrôle des gouvernes de l'aéronef comportant un sous-système d'ajustement de loi de commande de l'aéronef ;

[Fig. 2] illustre schématiquement un organigramme d'un procédé de contrôle de l'aéronef en vol visant à réduire l'impact du vent sur l'aéronef ; et

[Fig. 3] illustre schématiquement un exemple de plateforme matérielle adaptée et configurée pour implémenter le sous-système d'ajustement de loi de commande de l'aéronef.

EXPOSE DETAILLE DE MODES DE REALISATION

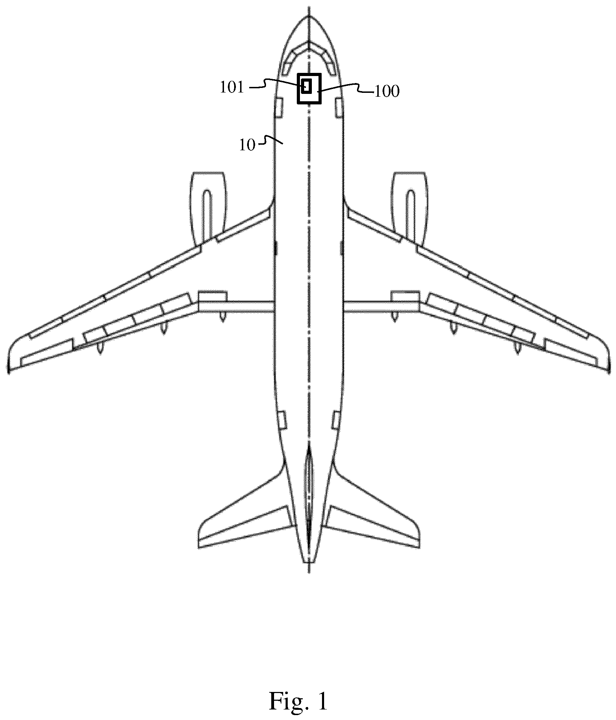

La **Fig. 1** illustre ainsi schématiquement, en vue de dessus, un aéronef 10. L'aéronef 10 comporte un système 100 de contrôle des gouvernes de l'aéronef 10 (gouvernes de profondeur, ailerons, gouvernes de direction). Le système 100 applique une loi de commande des gouvernes (ordres de déflection) de l'aéronef 10 en fonction de commandes de pilotage de l'aéronef 10.

Le système 100 de contrôle des gouvernes de l'aéronef 10 comporte un sous-système 101 d'ajustement de la loi de commande de l'aéronef 10 en fonction d'une estimation du vent subi par l'aéronef 10 en vol.

Classiquement, l'aéronef 10 comporte des capteurs (non représentés sur la Fig. 1), et de la circuiterie électronique de contrôle, adaptés et configurés pour fournir des mesures de vitesse et d'orientation de l'aéronef 10. Grâce à ces mesures, le sous-système 101 d'ajustement de la loi de commande de l'aéronef 10 est capable d'effectuer une estimation en trois dimensions du vent, dans un repère orthonormé direct $(x_b, y_b, z_b)$ fixe par rapport au centre de gravité de l'aéronef 10 (avec $x_b$ orienté vers l'avant de l'aéronef 10 et $y_b$ orienté vers la gauche de l'aéronef 10), de la manière suivante :

[MATH 1]

$$V = \begin{bmatrix} -V_{GND}\tan(\gamma) \\ -V_{TAS}(\sin(\theta)\cos(\beta)\cos(\alpha) - \cos(\theta)\cos(\varphi)\cos(\beta)\sin(\alpha) - \sin(\beta)\cos(\theta)\sin(\varphi)))) \\ V_{GND}\tan(\gamma) - V_{TAS}(\sin(\theta)\cos(\beta)\cos(\alpha) - \cos(\theta)\cos(\varphi)\cos(\beta)\sin(\alpha) + \sin(\beta)\cos(\theta)\sin(\varphi)))) \end{bmatrix}$$

Où :

- $V_{GND}$ représente la vitesse au sol (« Ground Speed » en anglais, vitesse horizontale de l'aéronef 10 par rapport à la surface de la Terre),
- $V_{TAS}$ représente la vitesse vraie de l'aéronef 10 (« True Air Speed » en anglais, vitesse de l'aéronef par rapport à la masse d'air à travers laquelle l'aéronef vole),
- $\varphi$ représente l'angle de roulis de l'aéronef 10, tel que fourni par le système de référence inertiel IRS (« Inertial Reference System » en anglais),
- $\theta$ représente l'angle de tangage de l'aéronef 10, tel que fourni par le système de référence inertiel IRS,
- $\alpha$ représente l'angle d'incidence de l'aéronef 10, tel que fourni par le système de référence inertiel de données air ADIRS (« Air Data Inertial Reference System » en anglais),
- $\beta$ représente l'angle de dérapage de l'aéronef 10, tel que fourni par le système de référence inertiel de données air ADIRS, et
- $\gamma$ représente l'angle de pente de l'aéronef 10, tel que fourni par le système de référence inertiel de données air ADIRS (« Air Data Inertial Reference System » en anglais).

Comme divulgué ci-après, le sous-système 101 d'ajustement de la loi de commande de l'aéronef 10 comporte de la circuiterie électronique adaptée et configurée pour effectuer en temps-réel une estimation du vent telle qu'exprimée ci-dessus, afin d'ajuster une loi de commande de gouvernes pour réduire l'impact du vent sur l'aéronef 10.

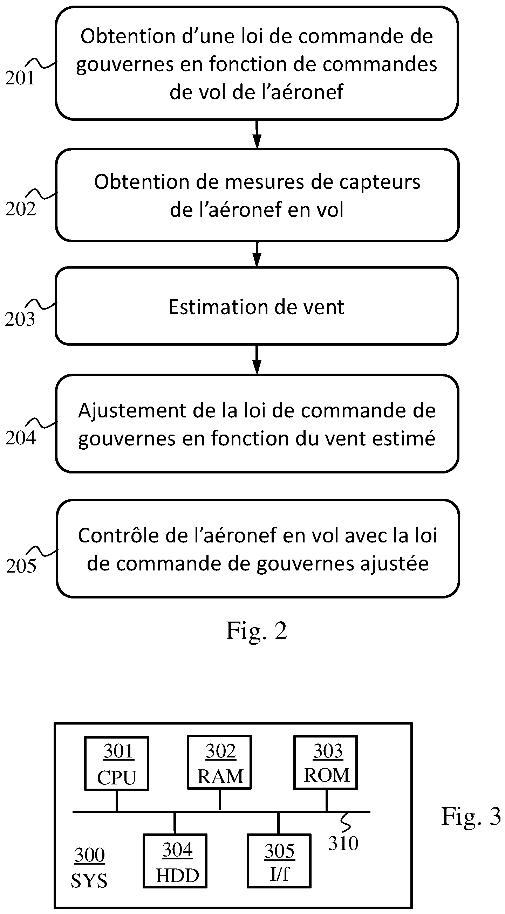

La **Fig. 2** illustre schématiquement un procédé de contrôle de l'aéronef 10 en vol visant à réduire l'impact du vent sur l'aéronef 10.

Dans une étape 201, le système 100 de contrôle des gouvernes de l'aéronef 10 obtient une loi de commande des gouvernes $u_i$ en fonction de commandes de vol de l'aéronef 10. Les commandes de vol sont actionnées par le pilote ou par un système de pilotage automatique, pour manœuvrer l'aéronef 10 en vol. La loi de commande des gouvernes $u_i$ obtenue à l'étape 201 ne tient pas compte de l'estimation du vent.

Dans une étape 202, le système 100 de contrôle des gouvernes de l'aéronef 10 obtient des mesures de vitesse et d'orientation de l'aéronef 10 utiles à l'estimation du vent, en temps réel. Plus particulièrement, le système 100 de contrôle des gouvernes de l'aéronef 10 obtient des mesures de la vitesse au sol $V_{GND}$ et de la vitesse vraie $V_{TAS}$. Le système 100 de contrôle des gouvernes de l'aéronef 10 obtient en outre l'angle de roulis $\varphi$ et l'angle de tangage $\theta$, ainsi que l'angle d'incidence $\alpha$, l'angle de dérapage $\beta$ et l'angle de pente $\gamma$.

Dans une étape 203, le sous-système 101 d'ajustement de la loi de commande de l'aéronef 10 effectue une estimation du vent, comme déjà décrit ci-dessus. Le sous-système 101 d'ajustement de la loi de commande de l'aéronef 10 surveille l'estimation du vent au fil du temps.

Dans une étape 204, le sous-système 101 d'ajustement de la loi de commande de l'aéronef 10 effectue un ajustement de la loi de commande des gouvernes $u_i$ obtenue à l'étape 201, afin de contrer l'effet du vent tel qu'estimé à l'étape 203, et obtient ainsi une loi de commande des gouvernes ajustée $u_a$.

Pour obtenir la loi de commande des gouvernes ajustée $u_a$. le sous-système 101 d'ajustement de la loi de commande de l'aéronef 10 ajoute, à la loi de commande des gouvernes $u_i$ obtenue à l'étape 201, un terme de compensation du vent $u_w$. Plus précisément, le terme de compensation du vent $u_w$ comporte un terme proportionnel

à la dérivée $\dot{V}$ (« derivative » en anglais) de l'estimation de vent $V$ de l'étape 203, et ainsi :

$$u_a = u_i + u_w = u_i + K\dot{V}$$

Où : $K$ est un coefficient prédéterminé.

Dans un mode de réalisation particulier, le terme de compensation du vent $u_w$ comporte en outre un terme proportionnel à l'intégrale (« integral » en anglais) de la dérivée $\dot{V}$ de l'estimation de vent $V$ de l'étape 203, et ainsi :

$$u_a = u_i + u_w = u_i + K\dot{V} + K_i \int \dot{V}$$

Où : $K_i$ est un coefficient prédéterminé.

Dans un mode de réalisation particulier, le terme de compensation du vent $u_w$ comporte en outre un terme proportionnel à la dérivée seconde $\ddot{V}$ de l'estimation de vent $V$ de l'étape 203, et ainsi :

$$u_a = u_i + u_w = u_i + K\dot{V} + K_i \int \dot{V} + K_d\ddot{V}$$

Où : $K_d$ est un coefficient prédéterminé.

### Première méthode

Dans une première méthode, l'aéronef 10 est modélisé par une représentation d'états définie, pour un modèle aéroélastique d'aéronef souple (prise en compte de déformations élastiques dues au couplage entre modes structuraux et efforts aérodynamiques) par :

$$\dot{x} = Ax + Bu_i$$

$$y = Cx = \frac{C}{s}\dot{x}$$

Où:

- x représente sous forme de vecteurs l'état courant de l'aéronef 10, défini par des paramètres aéronautiques influant sur la stabilité de l'aéronef 10, typiquement $[a\ q\ V_{TAS}\ \theta]$ sur l'axe longitudinal $x_b$ et $[\beta\ r\ p\ \varphi]$ conjointement sur les axes de lacet et de roulis, où $q$ représente la vitesse de tangage, $r$ représente la vitesse de lacet et $p$ représente la vitesse de roulis,
- $\dot{x}$ représente l'état de l'aéronef 10 après application de la loi de commande des gouvernes, ici la loi de commande des gouvernes $u_i$,
- $y$ représente des sorties de l'aéronef 10 sur lesquelles l'impact du vent est à minimiser (par exemple, une vitesse angulaire, ou une assiette, ou un critère de fatigue de la structure ou de tout élément modélisable de l'aéronef 10, etc.),
- $A$, $B$ et $C$ représentent des matrices d'état de l'aéronef 10 restituant la dynamique de son mouvement.
- $s$ représente l'opérateur de Laplace.

En somme, le nouvel état $\dot{x}$ de l'aéronef 10 obtenu en appliquant la loi de commande des gouvernes $u_i$ dépend de l'état courant $x$ de l'aéronef 10 et de la loi de commande des gouvernes $u_i$.

Les matrices $A$, $B$ et $C$ sont obtenues en appliquant les équations de la mécanique du vol de l'aéronef 10. Une telle modélisation est par exemple décrite dans « The dynamics of flight » de Jean-Luc Boiffier. Dans cet ouvrage, les matrices $A$, $B$ et $C$ sont obtenues à partir de fonctions F(X,U) comme décrit à la page 135 et suivantes. Une linéarisation des matrices est ensuite réalisée, comme décrit à la page 158. Une telle modélisation est aussi par exemple décrite dans la section 2.2 du document « Méthodologie de conception de lois de pilotage multiobjectifs autoséquencées pour un avion de transport civil souple », José TORRALBA, 2011, ONERA, Université de de Toulouse.

Ainsi, pour prendre en compte l'effet du vent, il est possible de dériver le modèle de la façon suivante :

$$\dot{x} = Ax + Bu_a + M\dot{V} = Ax + B(u_w + u_i) + M\dot{V}$$

Toujours avec :

$$y = Cx = \frac{C}{s}\dot{x}$$

Où : $M$ est une matrice de transfert de vent, c'est-à-dire une matrice d'estimation de l'effet du vent sur les états du modèle.

La matrice $M$ *est* obtenue soit analytiquement, soit par simulation par exemple par simulation avec un simulateur d'aéronef complet où, en connaissant $x$, $\dot{x}$, et $u_i$, et la dérivée du vent $V$, il est possible d'en déduire par calcul le contenu de la matrice $M$.

En somme, le nouvel état $\dot{x}$ de l'aéronef 10 lié au terme de compensation $u_w$ dépend de l'état courant x de l'aéronef 10 et du terme de compensation $u_w$.

Pour annuler l'effet du vent sur la fatigue de la structure de l'aéronef 10, l'équation suivante doit être respectée :

$$CBu_w + CM\dot{V} = 0$$

Alors, pour compenser l'effet du vent sur la fatigue de la structure de l'aéronef 10, le sous-système 101 d'ajustement de la loi de commande de l'aéronef 10 calcule le terme de compensation du vent $u_w$ de la façon suivante :

$$u_w = -inv(CB)CM\,\dot{V}$$

Ainsi, dans le mode de réalisation où

$$u_a = u_i + u_w = u_i + K\dot{V}$$

il ressort que

$$K = -inv(CB)CM$$

## Deuxième méthode

Dans une deuxième méthode, l'aéronef 10 est modélisé par un filtre du premier ordre, avec une constante $\tau$, ou du deuxième ordre, avec un amortissement $\xi_0$ et une pulsation $\omega_0$. La constante $\tau$, tout comme l'amortissement $\xi_0$ et la pulsation $\omega_0$, sont des caractéristiques dynamiques obtenues grâce à un simulateur. Le premier ou deuxième ordre correspond à des modélisations plus ou moins précises de l'aéronef 10. Le deuxième ordre sera plus précis que le premier ordre. Le choix entre premier ordre et deuxième ordre est fait en fonction d'une précision désirée.

Il est possible de modéliser la loi de commande des gouvernes ajustée $u_a$ de la façon suivante :

$$u_a = \frac{K_{i\_ui}}{s}(y_c - y_{mes}) + K_{p\_ui}y_{mes} + K_i\delta y + K\dot{\delta y} + K_d\ddot{\delta y}$$

Où:

- $y_c$ représente la consigne de l'asservissement (par exemple, l'assiette ou la vitesse angulaire de tangage)
- $y_{mes}$ représente la mesure de la grandeur asservie, comme l'assiette ou la vitesse engulaire de tangage. A noter que $y_{mes}$ comprend la contribution du pilote sur la grandeur asservie, ainsi que la contribution du vent V.
- $K_{i\_ui}$ et $K_{p\_ui}$ sont des coefficients prédéterminés relatifs à la loi de commande des gouvernes $u_i$ obtenue à l'étape 201, de sorte que :

$$u_i = \frac{K_{i\_ui}}{s}(y_c - y_{mes}) + K_{p\_ui}y_{mes}$$

Les coefficients $K_{i\_ui}$ et $K_{p\_ui}$ peuvent être déterminés par placement de pôles d'un système en boucle fermée selon un méthode de commande par retour d'états, comme il est par exemple adressé au lien suivant : https://fr.wikipedia.org/wiki/Commande par retour d%27%C3%A9tat

En considérant la commande des gouvernes de l'aéronef 10 comme un système en boucle fermée, le sous-système 101 d'ajustement de la loi de commande de l'aéronef 10 calcule un retour (« feedback » en anglais) visant à annuler l'impact du vent V sur l'aéronef 10. La modélisation du système en boucle fermée comporte un premier terme qui dépend de la consigne, typiquement le facteur de charge verticale commandé Nzc, et un deuxième terme qui dépend du vent V, appelé en automatique « fonction de sensibilité ». L'expression de cette fonction de sensibilité peut être obtenue analytiquement. La fonction de sensibilité est exprimée sous forme d'un numérateur et d'un dénominateur. Le dénominateur est par exemple déterminé par une méthode classique par placement de pôles, et le sous-système 101 d'ajustement de la loi de commande de l'aéronef 10 cherche à annuler le numérateur pour annuler l'effet du vent V.

Ainsi, dans le mode de réalisation où

$$u_a = u_i + u_w = u_i + K\dot{V} + K_i \int \dot{V} + K_d \ddot{V}$$

Il ressort que, avec un filtre du premier ordre, les coefficients sont fixés de la manière suivante :

$$\begin{cases} K_i = -1 \\ K = -\tau \\ K_d = 0 \end{cases}$$

ce qui annule le terme proportionnel à la dérivée seconde $\ddot{V}$ de l'estimation de vent V,
et, avec un filtre du deuxième ordre, les coefficients sont fixés de la manière suivante :

$$\begin{cases} K_i = -1 \\ K = -\dfrac{2\xi_0}{\omega_0} \\ K_d = -\dfrac{1}{\omega_0^2} \end{cases}$$

Dans une étape 205, le système 100 de contrôle des gouvernes de l'aéronef 10 contrôle l'aéronef 10 en vol avec la loi de commande de gouvernes ajustée $u_a$ obtenue à l'étape 204. En appliquant la loi de commande de gouvernes ajustée $u_a$ obtenue à l'étape 204 (avec prise en compte du vent) plutôt que la loi de commande des gouvernes $u_i$ obtenue à l'étape 201 (sans prise en compte du vent), l'impact du vent sur l'aéronef 10 est ainsi minimisé, ce qui réduit l'impact du vent sur la trajectoire de l'aéronef et/ou sur la fatigue de la structure de l'aéronef.

La **Fig. 3** illustre schématiquement un exemple d'une plateforme matérielle 300, sous forme de circuiterie électronique, qui est adaptée et configurée pour implémenter tout ou partie du système 100 de contrôle des gouvernes de l'aéronef 10, et plus particulièrement le sous-système 101 d'ajustement de la loi de commande de l'aéronef 10.

La plateforme matérielle comporte alors, reliés par un bus de communication 310 : un processeur ou CPU (« Central Processing Unit » en anglais) 301 ; une mémoire vive RAM (« Read-Only Memory » en anglais) 302 ; une mémoire morte 303, par exemple de type ROM (« Read Only Memory » en anglais) ou EEPROM (« Electrically-Erasable Programmable ROM » en anglais) ; une unité de stockage 304, telle qu'un disque dur HDD (« Hard Disk Drive » en anglais), ou un lecteur de support de stockage, tel qu'un lecteur de cartes SD (« Secure Digital » en anglais) ; et un gestionnaire d'interfaces I/f 305.

Le gestionnaire d'interfaces I/f 305 permet d'interagir avec un ou plusieurs équipements de l'aéronef 10, plus particulièrement des équipements de l'avionique de l'aéronef 10, afin de recevoir des informations utiles pour l'estimation du vent et pour faire appliquer la loi de commande ajustée pour le contrôle des gouvernes de l'aéronef 10.

Le processeur 301 est capable d'exécuter des instructions chargées dans la mémoire vive 302 à partir de la mémoire morte 303, d'une mémoire externe, d'un support de stockage (tel qu'une carte SD), ou d'un réseau de communication. Lorsque la plateforme matérielle est mise sous tension, le processeur 301 est capable de lire de la mémoire vive 302 des instructions et de les exécuter. Ces instructions forment un programme d'ordinateur causant l'implémentation, par le processeur 301, de tout ou partie des étapes et fonctionnements décrits ici.

Tout ou partie des étapes et fonctionnements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, la plateforme matérielle comporte de la circuiterie électronique adaptée et configurée pour implémenter les fonctionnements et étapes décrits ici.

**Revendications**

1. Procédé de contrôle de gouvernes d'un aéronef (10), le procédé étant effectué par un système (100) de contrôle des gouvernes de l'aéronef (10) sous forme de circuiterie électronique et comportant les étapes suivantes :

   - obtenir (201) une loi de commande des gouvernes $u_i$ en fonction de commandes de vol de l'aéronef (10) ;
   - obtenir (202) des mesures de vitesse au sol $V_{GND}$ de l'aéronef (10), de vitesse vraie $V_{TAS}$ de l'aéronef (10), d'angle de roulis $\varphi$ de l'aéronef (10), d'angle de tangage $\theta$ de l'aéronef (10), d'angle d'incidence $\alpha$ de l'aéronef (10), d'angle de dérapage $\beta$ de l'aéronef (10), et d'angle de pente $\gamma$ de l'aéronef (10) ;

   le procédé étant **caractérisé en ce qu'**il comporte en outre :

   - effectuer (203) une estimation du vent $V$ en trois dimensions à partir des mesures obtenues ;
   - effectuer (204) un ajustement de la loi de commande des gouvernes $u_i$, afin de contrer l'effet du vent estimé, et obtenir ainsi une loi de commande des gouvernes ajustée $u_a$, en ajoutant, à la loi de commande des gouvernes $u_i$, un terme de compensation du vent $u_w$ comportant un terme proportionnel à la dérivée $\dot{V}$ de l'estimation de vent $V$ ; et
   - contrôler (205) l'aéronef (10) en appliquant la loi de commande ajustée $u_a$.

2. Procédé selon la revendication 1, dans lequel :

$$u_w = -inv(CB)CM\,\dot{V}$$

   où C, B et M sont des matrices définies par

$$\dot{x} = Ax + B(u_w + u_i) + M\dot{V}$$

   avec :

$$y = Cx = \frac{C}{s}\dot{x}$$

   où :

   - $x$ représente sous forme de vecteurs l'état courant de l'aéronef (10), défini par des paramètres aéronautiques influant sur la stabilité de l'aéronef (10),
   - $\dot{x}$ représente l'état de l'aéronef (10) après application de la loi de commande des gouvernes, ici la loi de commande des gouvernes $u_a$,
   - y représente des sorties de l'aéronef (10) sur lesquelles l'impact du vent est à minimiser,
   - A, B et C représentent des matrices d'état de l'aéronef (10) restituant la dynamique de son mouvement.
   - s représente l'opérateur de Laplace, et
   - M est une matrice de transfert de vent V.

3. Procédé selon la revendication 1, dans lequel la loi de commande des gouvernes ajustée $u_a$ est obtenue en ajoutant en outre, à la loi de commande des gouvernes $u_i$, un terme proportionnel à l'intégrale de la dérivée $V$ de l'estimation de vent V.

4. Procédé selon la revendication 3, dans lequel l'aéronef est modélisé avec un filtre du premier ordre de constante $\tau$, et dans lequel

$$\begin{cases} K_i = -1 \\ K = -\tau \end{cases}$$

où $K_i$ est un coefficient multiplicateur du terme proportionnel à l'intégrale de la dérivée $V$ de l'estimation de vent $V$ et où $K$ est un coefficient multiplicateur du terme proportionnel à la dérivée $V$ de l'estimation de vent $V$.

5. Procédé selon la revendication 3, dans lequel la loi de commande des gouvernes ajustée $u_a$ est obtenue en ajoutant en outre, à la loi de commande des gouvernes $u_i$, un terme proportionnel à la dérivée seconde $\ddot{V}$ de l'estimation de vent $V$.

6. Procédé selon la revendication 4, dans lequel l'aéronef est modélisé avec un filtre du deuxième ordre ayant un amortissement $\xi_0$ et une pulsation $\omega_0$ et dans lequel :

$$\begin{cases} K_i = -1 \\ K = -\dfrac{2\xi_0}{\omega_0} \\ K_d = -\dfrac{1}{\omega_0^2} \end{cases}$$

où $K_i$ est un coefficient multiplicateur du terme proportionnel à l'intégrale de la dérivée $V$ de l'estimation de vent $V$, où $K$ est un coefficient multiplicateur du proportionnel à la dérivée $V$ de l'estimation de vent $V$ et où $K_d$ est un coefficient multiplicateur du terme proportionnel à la dérivée seconde $\ddot{V}$ de l'estimation de vent $V$.

7. Produit programme d'ordinateur, comportant des instructions entraînant l'exécution, par un processeur, du procédé selon l'une quelconque des revendications 1 à 6, lorsque lesdites instructions sont exécutées par le processeur.

8. Support de stockage, stockant un programme d'ordinateur comportant des instructions entraînant l'exécution, par un processeur, du procédé selon l'une quelconque des revendications 1 à 6, lorsque lesdites instructions sont lues et exécutées par le processeur.

9. Système (100) de contrôle de gouvernes d'un aéronef (10) sous forme de circuiterie électronique configurée pour implémenter les étapes suivantes :

   - obtenir (201) une loi de commande des gouvernes $u_i$ en fonction de commandes de vol de l'aéronef (10) ;
   - obtenir (202) des mesures de vitesse au sol $V_{GND}$ de l'aéronef (10), de vitesse vraie $V_{TAS}$ de l'aéronef (10), d'angle de roulis $\varphi$ de l'aéronef (10), d'angle de tangage $\theta$ de l'aéronef (10), d'angle d'incidence $\alpha$ de l'aéronef (10), d'angle de dérapage $\beta$ de l'aéronef (10), et d'angle de pente $\gamma$ de l'aéronef (10) ;

   le système (100) étant **caractérisé en ce que** la circuiterie électronique est en outre configurée pour implémenter les étapes suivantes :

   - effectuer (203) une estimation du vent V en trois dimensions à partir des mesures obtenues ;
   - effectuer (204) un ajustement de la loi de commande des gouvernes $u_i$, afin de contrer l'effet du vent estimé, et obtenir ainsi une loi de commande des gouvernes ajustée $u_a$, en ajoutant, à la loi de commande des gouvernes $u_i$, un terme de compensation du vent $u_w$ comportant un terme proportionnel à la dérivée $V$ de l'estimation de *vent V* ; et
   - contrôler (205) l'aéronef (10) en appliquant la loi de commande ajustée $u_a$.

10. Aéronef (10) comportant un système de contrôle de gouvernes selon la revendication 9.

**Patentansprüche**

1. Verfahren zur Kontrolle von Steuerflächen eines Luftfahrzeugs (10), wobei das Verfahren von einem Steuersystem (100) der Steuerflächen eines Luftfahrzeugs (10) in Form einer elektronischen Schaltungsanordnung ausgeführt wird und die folgenden Schritte aufweist:

- Erhalt (201) eines Steuergesetzes der Steuerflächen $u_i$ abhängig von Flugsteuerungen des Luftfahrzeugs (10);
- Erhalt (202) von Messungen der Bodengeschwindigkeit $V_{GND}$ des Luftfahrzeugs (10), der Eigengeschwindigkeit $V_{TAS}$ des Luftfahrzeugs (10), des Rollwinkels $\varphi$ des Luftfahrzeugs (10), des Nickwinkels $\theta$ des Luftfahrzeugs (10), des Anstellwinkels $\alpha$ des Luftfahrzeugs (10), des Schiebewinkels $\beta$ des Luftfahrzeugs (10) und des Steigwinkels $\gamma$ des Luftfahrzeugs (10);

wobei das Verfahren **dadurch gekennzeichnet ist, dass** es außerdem aufweist:

- Ausführung (203) einer dreidimensionalen Schätzung des Winds V ausgehend von den erhaltenen Messungen;
- Ausführung (204) einer Anpassung des Steuergesetzes der Steuerflächen $u_i$, um der Einwirkung des geschätzten Winds entgegenzuwirken und so ein angepasstes Steuergesetz $u_a$ der Steuerflächen zu erhalten, indem ein Kompensationsterm des Winds $u_w$ zum Steuergesetz der Steuerflächen $u_i$ hinzugefügt wird, der einen Term proportional zur Ableitung V der Windschätzung V aufweist; und
- Kontrolle (205) des Luftfahrzeugs (10) unter Anwendung des angepassten Steuergesetzes $u_a$.

2. Verfahren nach Anspruch 1, wobei:

$$u_w = -inv(CB)CM\dot{V}$$

wobei C, B und M durch

$$\dot{x} = Ax + B(u_w + u_i) + M\dot{V}$$

definierte Matrizen sind, mit:

$$y = Cx = \frac{C}{s}\dot{x}$$

wobei:

- x den aktuellen Zustand des Luftfahrzeugs (10) in Form von Vektoren darstellt, definiert durch flugtechnische Parameter, die die Stabilität des Luftfahrzeugs (10) beeinflussen,
- $\dot{x}$ den Zustand des Luftfahrzeugs (10) nach Anwendung des Steuergesetzes der Steuerflächen darstellt, hier das Steuergesetz der Steuerflächen $u_a$,
- y Ausgänge des Luftfahrzeugs (10) darstellt, an denen der Aufprall des Winds zu minimieren ist,
- A, B und C Zustandsmatrizen des Luftfahrzeugs (10) darstellen, die die Dynamik seiner Bewegung wiedergeben,
- s den Laplace-Operator darstellt, und
- M eine Windübertragungsmatrix V ist.

3. Verfahren nach Anspruch 1, wobei das angepasste Steuergesetz der Steuerflächen $u_a$ erhalten wird, indem außerdem ein Term proportional zum Integral der Ableitung V der Windschätzung V zum Steuergesetz der Steuerflächen $u_i$ hinzugefügt wird.

4. Verfahren nach Anspruch 3, wobei das Luftfahrzeug mit einem Filter erster Ordnung einer Konstante $\tau$ modellisiert wird, und wobei

$$\begin{cases} K_i = -1 \\ K = -\tau \end{cases}$$

wobei $K_i$ ein Multiplikator des Terms proportional zum Integral der Ableitung V der Windschätzung V ist, und wobei K ein Multiplikator des Terms proportional zur Ableitung V der Windschätzung V ist.

5. Verfahren nach Anspruch 3, wobei das angepasste Steuergesetz der Steuerflächen $u_a$ erhalten wird, indem außerdem ein Term proportional zur zweiten Ableitung $V$ der Windschätzung V zum Steuergesetz der Steuerflächen $u_i$ hinzugefügt wird.

6. Verfahren nach Anspruch 4, wobei das Luftfahrzeug mit einem Filter zweiter Ordnung modellisiert wird, der eine Dämpfung $\xi_0$ und eine Kreisfrequenz $\omega_0$ hat, und wobei:

$$\begin{cases} K_i = -1 \\ K = -\dfrac{2\xi_0}{\omega_0} \\ K_d - \dfrac{1}{\omega_0^2} \end{cases}$$

wobei $K_i$ ein Multiplikator des Terms proportional zum Integral der Ableitung $V$ der Windschätzung V ist, wobei K ein Multiplikator des Terms proportional zur Ableitung $V$ der Windschätzung V ist, und wobei $K_d$ ein Multiplikator des Terms proportional zur zweiten Ableitung $V$ der Windschätzung V ist.

7. Computerprogrammprodukt, das Anweisungen aufweist, die die Ausführung des Verfahrens nach einem der Ansprüche 1 bis 6 durch einen Prozessor bewirken, wenn die Anweisungen vom Prozessor ausgeführt werden.

8. Speicherträger, der ein Computerprogramm speichert, das Anweisungen aufweist, die die Ausführung des Verfahrens nach einem der Ansprüche 1 bis 6 durch einen Prozessor bewirken, wenn die Anweisungen vom Prozessor gelesen und ausgeführt werden.

9. System (100) zum Kontrolle von Steuerflächen eines Luftfahrzeugs (10) in Form einer elektronischen Schaltungsanordnung, die konfiguriert ist, die folgenden Schritte zu implementieren:

   - Erhalt (201) eines Steuergesetzes der Steuerflächen $u_i$ abhängig von Flugsteuerungen des Luftfahrzeugs (10);
   - Erhalt (202) von Messungen der Bodengeschwindigkeit $V_{GND}$ des Luftfahrzeugs (10), der Eigengeschwindigkeit $V_{TAS}$ des Luftfahrzeugs (10), des Rollwinkels $\varphi$ des Luftfahrzeugs (10), des Nickwinkels $\theta$ des Luftfahrzeugs (10), des Anstellwinkels $\alpha$ des Luftfahrzeugs (10), des Schiebewinkels $\beta$ des Luftfahrzeugs (10) und des Steigwinkels $\gamma$ des Luftfahrzeugs (10);

   wobei das System (100) **dadurch gekennzeichnet ist, dass** die elektronische Schaltungsanordnung außerdem konfiguriert ist, die folgenden Schritte zu implementieren:

   - Ausführung (203) einer dreidimensionalen Schätzung des Winds V ausgehend von den erhaltenen Messungen;
   - Ausführung (204) einer Anpassung des Steuergesetzes der Steuerflächen $u_i$, um der Einwirkung des geschätzten Winds entgegenzuwirken und so ein angepasstes Steuergesetzes der Steuerflächen $u_a$ zu erhalten, indem dem Steuergesetz der Steuerflächen $u_i$ ein Kompensationsterm des Winds $u_w$ hinzugefügt wird, der einen Term proportional zur Ableitung $V$ der Windschätzung V aufweist; und
   - Kontrolle (205) des Luftfahrzeugs (10) durch Anwendung des angepassten Steuergesetzes $u_a$.

10. Luftfahrzeug (10), das ein Steuerflächen-Kontrollsystem nach Anspruch 9 aufweist.

### Claims

1. Method for controlling flight control surfaces of an aircraft (10), the method being carried out by a system (100) for controlling the flight control surfaces of the aircraft (10) in the form of electronic circuitry and comprising the following steps:

   - obtaining (201) a control law for the flight control surfaces $u_i$ as a function of flight controls of the aircraft (10);
   - obtaining (202) measurements of ground speed $V_{GND}$ of the aircraft (10), of true speed $V_{TAS}$ of the aircraft (10), of roll angle $\varphi$ of the aircraft (10), of pitch angle $\theta$ of the aircraft (10), of angle of attack $\alpha$ of the aircraft (10), of sideslip angle $\beta$ of the aircraft (10), and of slope angle $\gamma$ of the aircraft (10);

the method being **characterized in that** it further comprises:

- performing (203) an estimation of the wind V in three dimensions using the measurements obtained;
- performing (204) an adjustment of the control law for the flight control surfaces $u_i$, in order to counter the estimated effect of the wind, and thus obtain an adjusted control law for the flight control surfaces $u_a$, by adding, to the control law for the flight control surfaces $u_i$, a term for compensation of the wind $u_w$ comprising a term proportional to the derivative $V$ of the wind estimation V; and
- controlling (205) the aircraft (10) by applying the adjusted control law $u_a$.

2. Method according to Claim 1, wherein:

$$u_w = -inv(CB)CM\,\dot{V}$$

where C, B and M are matrices defined by

$$\dot{x} = Ax + B(u_w + u_i) + M\dot{V}$$

with:

$$y = Cx = \frac{C}{s}\dot{x}$$

where:

- x represents, in the form of vectors, the current state of the aircraft (10), defined by aeronautical parameters having an influence on the stability of the aircraft (10),
- $\dot{x}$ represents the state of the aircraft (10) after application of the control law for the flight control surfaces, here the control law for the flight control surfaces $u_a$,
- $y$ represents excursions of the aircraft (10) on which the impact of the wind is to be minimized,
- $A, B$ and $C$ represent matrices of state of the aircraft (10) reproducing the dynamic behaviour of its movement
- $s$ represents the Laplace operator, and
- $M$ is a transfer matrix for the wind $V$.

3. Method according to Claim 1, wherein the adjusted control law for the flight control surfaces $u_a$ is obtained by further adding, to the control law for the flight control surfaces $u_i$, a term proportional to the integral of the derivative $V$ of the wind estimation $\dot{V}$.

4. Method according to Claim 3, wherein the aircraft is modelled with a filter of the first order of constant $\tau$, and wherein

$$\begin{cases} K_i = -1 \\ K = -\tau \end{cases}$$

where $K_i$ is a multiplier coefficient of the term proportional to the integral of the derivative $V$ of the wind estimation $V$ and where $K$ is a multiplier coefficient of the term proportional to the derivative $V$ of the wind estimation $V$.

5. Method according to Claim 3, wherein the adjusted control law for the flight control surfaces $u_a$ is obtained by further adding, to the control law for the flight control surfaces $u_i$, a term proportional to the second derivative $V$ of the wind estimation $V$.

6. Method according to Claim 4, wherein the aircraft is modelled with a filter of the second order having a damping $\xi_0$ and an angular frequency $\omega_0$ and wherein:

$$\begin{cases} K_i = -1 \\ K = -\dfrac{2\xi_0}{\omega_0} \\ K_d = -\dfrac{1}{\omega_0^2} \end{cases}$$

where $K_i$ is a multiplier coefficient of the term proportional to the integral of the derivative $V$ of the wind estimation $V$, where $K$ is a multiplier coefficient of the proportional to the derivative $V$ of the wind estimation $V$ and where $K_d$ is a multiplier coefficient of the term proportional to the second derivative $V$ of the wind estimation $V$.

7. Computer programme product, comprising instructions causing the execution, by a processor, of the method according to any one of Claims 1 to 6, when said instructions are executed by the processor.

8. Storage medium, storing a computer programme comprising instructions causing the execution, by a processor, of the method according to any one of Claims 1 to 6, when said instructions are read and executed by the processor.

9. System (100) for controlling flight control surfaces of an aircraft (10) in the form of electronic circuitry configured for implementing the following steps:

- obtaining (201) a control law for the flight control surfaces $u_i$ as a function of flight controls of the aircraft (10);
- obtaining (202) measurements of ground speed $V_{GND}$ of the aircraft (10), of true speed $V_{TAS}$ of the aircraft (10), of roll angle $\varphi$ of the aircraft (10), of pitch angle $\theta$ of the aircraft (10), of angle of attack $\alpha$ of the aircraft (10), of sideslip angle $\beta$ of the aircraft (10), and of slope angle $\gamma$ of the aircraft (10);

the system (100) being **characterized in that** the electronic circuitry is further configured for implementing the following steps:

- performing (203) an estimation of the wind V in three dimensions using the measurements obtained;
- performing (204) an adjustment of the control law for the flight control surfaces $u_i$, in order to counter the estimated effect of the wind, and thus obtain an adjusted control law for the flight control surfaces $u_a$, by adding, to the control law for the flight control surfaces $u_i$, a term for compensation of the wind $u_w$ comprising a term proportional to the derivative $V$ of the wind estimation $V$; and
- controlling (205) the aircraft (10) by applying the adjusted control law $u_a$.

10. Aircraft (10) comprising a control system of flight control surfaces according to Claim 9.

Fig. 1

201 Obtention d'une loi de commande de gouvernes en fonction de commandes de vol de l'aéronef

202 Obtention de mesures de capteurs de l'aéronef en vol

203 Estimation de vent

204 Ajustement de la loi de commande de gouvernes en fonction du vent estimé

205 Contrôle de l'aéronef en vol avec la loi de commande de gouvernes ajustée

Fig. 2

301 CPU

302 RAM

303 ROM

300 SYS

304 HDD

305 I/f

310

Fig. 3

## RÉFÉRENCES CITÉES DANS LA DESCRIPTION

**Documents brevets cités dans la description**

- US 2016023776 A1

**Littérature non-brevet citée dans la description**

- Méthodologie de conception de lois de pilotage multiobjectifs autoséquencées pour un avion de transport civil souple. **JOSÉ TORRALBA**. ONERA. Université de de Toulouse, 2011